(19) Europäisches Patentamt European Patent Office Office européen des brevets

(11) **EP 3 884 377 B1**

(12) **EUROPEAN PATENT SPECIFICATION**

(45) Date of publication and mention
of the grant of the patent:
**23.07.2025 Bulletin 2025/30**

(21) Application number: **18825945.1**

(22) Date of filing: **13.12.2018**

(51) International Patent Classification (IPC):
*G06F 8/658* (2018.01)

(52) Cooperative Patent Classification (CPC):
**G06F 8/658**

(86) International application number:
**PCT/EP2018/084788**

(87) International publication number:
**WO 2020/119904 (18.06.2020 Gazette 2020/25)**

(54) **IN PLACE PATCH BUFFER OFFSET OPTIMISATION**

OPTIMIERUNG DES PATCH-PUFFERVERSATZES IN SITU

OPTIMISATION DE DÉCALAGE DE TAMPON DE PIÈCE EN PLACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.09.2021 Bulletin 2021/39**

(73) Proprietor: **Huawei Technologies Co., Ltd.
Shenzhen Guangdong 518129 (CN)**

(72) Inventors:
• **YOUNG, Robert William
80992 Munich (DE)**
• **LIU, Wenlong
80992 Munich (DE)**
• **LOWE, Christopher
80992 Munich (DE)**

(74) Representative: **Gill Jennings & Every LLP
The Broadgate Tower
20 Primrose Street
London EC2A 2ES (GB)**

(56) References cited:
**WO-A1-2005/088448     US-A1- 2017 090 901**

## Description

This invention relates to techniques for updating software using patches, in particular where those patches are applied to the software in-place.

Software can be updated remotely by transmitting replacement code to devices that have the original, or source, code. The receiving device then overwrites its copy of the original code with the replacement code. Software updates can often be large, so it is preferable to compress the replacement code before it is transmitted in order to use the available bandwidth more efficiently. Compressing the replacement code prior to transmission typically achieves a reduction of around 50% in the amount of data that is transmitted.

In the field of firmware updates, for example Firmware Over the Air (FOTA) or Device Firmware Update (DFU), sometimes the images supplied can be "differential". This means that the image will contain instructions and information that allow the generation of the target version of the firmware based on the old image. These "differential" patch images are generally smaller than just a compressed version of the target image.

One such update technique is BSDiff. This technique benefits from the fact that much of the replacement code will often be the same as the old code. Therefore, rather than transmitting a whole image, a patch file is generated for transmission over the air interface that encodes the differences between the replacement code and the old code. This technique makes more efficient use of the available bandwidth than compression alone. BSDiff can achieve a reduction of up to 90% in the amount of data that is transmitted compared with the uncompressed replacement code. The device constructs the replacement image by applying the differences specified in the patch to its stored version of the code, thereby gradually building its own copy of the replacement code. This approach is not ideal for constrained devices with small flash memories because it requires the device to store the new image that it is constructing at the same time that it is still storing the original software image.

An alternative approach is for the device to construct the replacement image in situ by progressively overwriting the stored version of the code. In this approach, the patch, or Diff image, specifies the differences between the replacement image and a continually mutating version of the stored image, in emulation of the progressive transformation of the original image into the replacement image that will eventually take place in the device. This approach is beneficial for memory-constrained devices because the device stores the progressively updating version of the original image, rather than both an unamended version of the original image and an "in progress" version of the replacement image.

Such techniques are outlined in WO 2018/054496 A1. Given that the old image needs to be transformed into the target image, and that data from the old image is used in the construction of the new image, a challenge is to ensure that the old image's data is available for such a transformation.

It is possible to counter this somewhat, for example by making a choice based on the sizes of the old and target images. If the target is bigger than the old image, then the patching is performed 'bottom-up', so that the target image is assembled from beyond the end of the old image. If the target image is smaller than the old image, then the patching is performed 'top-down', so that the smaller image overwrites the larger one, meaning that as the process continues much of the image data remains.

This in-place patch method sometimes suffers from poor performance due to large patch sizes. This is caused by the 'top-down' or 'bottom-up' technique failing in some circumstances where useful parts of the images get overwritten during the update. If the old image data gets overwritten before it is used, then the Diff image cannot use it. The Diff image instead stores compressed data, not the smaller Diff data, which may be less efficient.

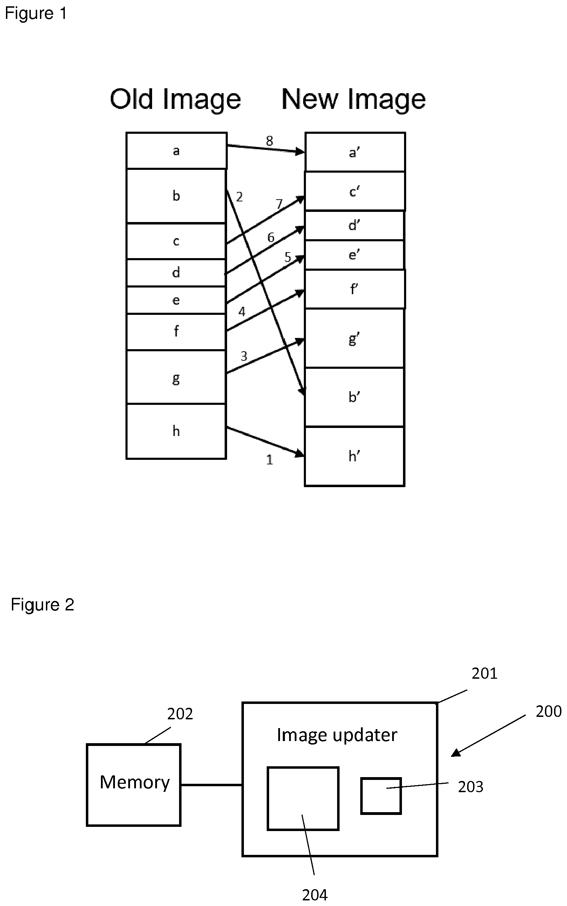

There is a pathological case where in applying these images, the old data gets overwritten before it can be used to generate the target image as the patching proceeds. This is illustrated in Figure 1. Operations 1, 2 and 7 work successfully. For example, the source image h is available for transformation into h' at the time of operation 1. Operations 3, 4, 5 and 6 work poorly, as the operation 2 caused image b' to be written. This caused overwriting of the original image g. Therefore, in constructing image g', much of the data that could be used in a Diff has been overwritten.

One approach is to reverse the direction in which the patching is undertaken. Therefore, even though, for example, the target image is bigger than the source, the patching is undertaken 'top-down'. While this would be normally sub-optimal, it may ameliorate the pathological case. Another approach is to try both 'top-down' and 'bottom-up' patching and see which ordering results in the smaller image file. These techniques can bring some benefit but the potential for substantial overwriting is still possible, with the concomitant larger patch sizes.

In US 6018747 an approach using a directed acyclic graph is used to re-order the image blocks. This may be beneficial, but the complexity of the implementation makes this method difficult to use.

Further background to the invention is described in US 2017/090901 A1 and WO 2005/088448 A1.

US 2017/090901 A1 describes a software updating method. A target file is divided into segments, where some segments are updated by patching, while other segments are updated by archiving. The segmentation of the update allows very large files such as DYLD shared caches to be patched in-place, i.e., by using free space available within the file to perform patching rather than requiring enough free space on disk to store both the new version and the old version of the file. The segmentation of the update also allows each segment to be updated individually by the most optimal update method (copy, patch, or archive) so that the size of the update file can be minimized.

WO 2005/088448 A1 describes in-place updating of an old version of a file stored on a storage device to form a new version, wherein the old version includes blocks. The form of the old version is determined for indicating at which end of the old version free space is located, as well as determining whether an update package is a corresponding update package for the form. If the update package is a corresponding update package, blocks in the old version are updated according to the update package, giving rise to a new version having an alternative form, where free space in the new version is at an opposite end to the old version.

## SUMMARY OF THE INVENTION

It is an object of the invention to provide improved techniques for applying patch files.

According to a first aspect, there is provided a device as set out in claim 1.

This approach may generally result in smaller Diffs than the 'reversal' approaches, and is relatively simple to implement. Additionally, by applying the patch to the padded source image, most operations are able to work effectively without overwriting.

The first memory may be a non-volatile memory. The first memory may be a flash memory. Storing the Diffs and updated images in a non-volatile memory may ensure that the replacement image section is retained in the event of a power interruption.

The device may comprise a processor and the initial image may be executable by the processor. This is a convenient configuration.

The initial image may be some part of the firmware of the device. This may allow the generation of the target version of the firmware based on the initial image.

The only region of the initial image in dependence on which the update data defines the said part of the updated image may be the said part of the initial image.

According to a second aspect there is provided a method for updating an initial image in a device as set out in claim 4.

Shifting the entirety of the initial image in the memory may be done by padding the part of the initial image. This may help to prevent overwriting of parts of the initial data not yet used in the update.

## BRIEF DESCRIPTION OF THE FIGURES

The present invention will now be described by way of example with reference to the accompanying drawings. In the drawings:

Figure 1 illustrates a known technique for applying a patch to an image.
Figure 2 shows an example of an image update apparatus.
Figure 3 illustrates a basic method of applying a patch to a source image.
Figure 4 illustrates an embodiment of a technique for applying a patch.
Figure 5 illustrates an example of a technique for applying a patch that does not form part of the invention.
Figure 6 illustrates an example of a method for updating an initial image in a device.

## DETAILED DESCRIPTION OF THE INVENTION

An example of an image update apparatus 200 is shown in Figure 2. The image update apparatus is shown illustratively as comprising a number of functional blocks, including an image updater 201. In practice, the image updater is likely to be implemented using software. Therefore, the image updater may be implemented wholly or partly by a processor acting under software control. The functional blocks shown in Figure 2 may be embodied by a single computer program stored on a non-transitory machine-readable storage medium. In other implementations, the image updater of Figure 2 could be embodied by a number of separate computer programs. Figure 2 is not intended to define a strict division between different programs, procedures or functions in software.

In other implementations, some or all of the functions of the image updater could be implemented wholly or partly in hardware.

The image update apparatus 200 comprises an image updater 201 and a memory 202. The memory could be implemented by any type of memory. The memory is preferably a non-volatile memory. In one example, the memory is implemented by flash memory.

Memory 202 is configured to store a source image. Image updater 201 is configured to update that source image by applying a patch 203. The patch 203 defines a series of progressive changes to the image that is stored in the memory. Patch 203 may be a Diff image, i.e. the patch may include the difference or delta between the source image and an updated image obtained by applying the patch 203. The Diff image is a collection of Diff data and these two terms will be used interchangeably throughout the document. The image updater is preferably configured to implement the patch in situ, so that the source image that is stored by the memory originally undergoes a step-wise mutation into the target image via the series of progressive changes defined by the patch. The patch may be supplied to the image updater by a patch generator (not shown in Figure 2).

The patch comprises a series of instructions for the image update apparatus. Essentially the patch is a file that instructs the apparatus how to update its software. The replacement software is termed the "target image" with the original code stored at the device termed the "source image". The image may be any program, procedure or function in the device's software, or any part thereof. The patch describes how the device can update its source image to transform it into the target image. The patch is typically formed from a series of instructions to the apparatus. The instructions are sequential, and will progressively transform the source image into the target image when applied in order by the receiving device. In some implementations, the instructions may comprise so-called "Ctrl-Tri components". These components are formed of three values: x, y and z. They may also be accompanied by "diff" and "extra" values. Together this data represents an instruction to the apparatus that "x" bytes of data should be copied from position "y" to position "z" by applying an alteration "diff" and adding extra bytes "e".

The patch can be implemented in situ by progressively overwriting the source image that it has stored in memory.

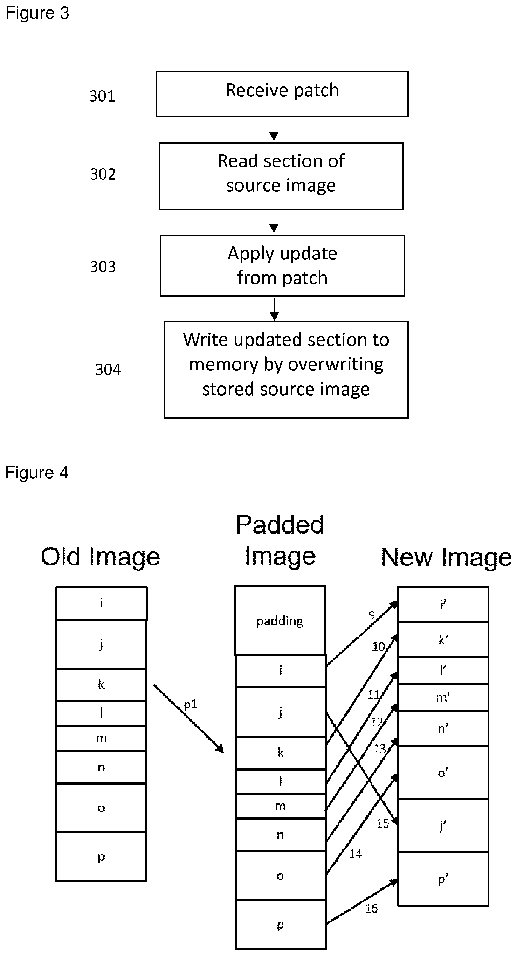

The basic operations of image updater 201 will now be described with reference to Figure 3, which provides an overview of a basic method for updating a source image by applying a patch in situ at the device.

The process of applying the patch commences in step 301 when the image updater receives a patch. The patch may be transmitted and received over a wireless connection. The patch may also be exchanged via other communication means, including wired connections. The image updater suitably comprises an antenna, receive chain, demodulator, decoder, decompressor etc. so that the patch input into the image updater is the same as the patch that was output by a patch generator (assuming that the patch was transmitted and received successfully). In step 302 the image update unit starts to update the source image by reading the section that the first patch instruction relates to from memory. The image update unit updates that section of the source image by applying the instruction in the patch (step 303). That instruction might involve reading bytes from one location in the source image so that they can be written back to a different location, making some alteration to the read bytes before writing them back to memory and/or adding some extra bytes to the read bytes before they are written back to the memory etc. The updated section is then written back to memory by the image updater by overwriting at least part of the source image that is stored there already (step 304). In many instances, the section of the source image that was read from memory in step 304 will be overwritten as the updated section is written back to memory. The updated section can then be written back to memory.

The instructions in the patch, or Diff image, instruct data to be moved from the source image to the target image, adding in the Diff data. When moving data from the source image and modifying it with the patch/Diff data, the order in which the data is written is very important. If the source and target overlap, attention must be paid to the order in which they are written. The instructions work up through the file, but each instruction may be handled top-down or bottom-up.

For example, the source data may be between 100 - 300 and the target data between 200 - 400.

Performing such a move of data could be written as:

$$\text{for } (j = 0; j < 200; j{+}{+})$$

$$a[200+j] = a[100+j]$$

However, this will overwrite the data at 200 before it's had a chance to be read. When j==100, a [100+100] was already overwritten. The result of this is a repetition of the section that made it across without being overwritten. Therefore, the instruction must be handled from the top down in this case.

$$\text{for } (j = 199; j >= 0; j{-}{-})$$

$$a[200+j] = a[100+j]$$

By reading from the top down, in this case, the data is not overwritten. In other cases, the data may need to be written from the bottom up. Such techniques are used in implementations of the function memmove(). "memmove()" is a standard software function for moving memory that respects potentially overlapping regions for source and destination data. memvove() is just an example and it should be clear that any function having the above described properties could also serve as an example.

One consequence of the image updater causing updated sections of the source image to be written directly back to the stored source image is that the device does not have to store both the original source image and an "in progress" version of the target image. Instead the device only stores the progressively updating version of the source image, which provides a useful memory saving. The image updater preferably implements the updates of the patch in the same order that they are presented in the patch, so that its stored version of the source image progressively updates in the way that was anticipated by the patch generator. However, large sections of data can still be overwritten.

The update can be broken into two steps. In the first step, the image is shifted in memory. In the second step, the in-place update is performed, but since the image has moved, there is improved use of useful, not-yet-overwritten data. This process will now be described in further detail.

In one example, as shown in Figure 4, a source image (old image) with parts i-p is stored in an initial block of contiguous memory. Padding may be applied so that the parts of the updated image are then stored at a different set of memory locations that are shifted (i.e.

non-overlapping) with respect to the initial memory locations of the source image in the memory 202 (padded image). Here, the locations of the padded image parts are higher in memory than the initial locations of those parts. This shift is indicated by arrow p1.

This therefore has the effect of shifting the entirety of the initial image from its original contiguous block of memory 202 to a second contiguous block of memory 202 overlapping but offset from the initial contiguous block.

The device may then implement the update by applying the patch to create the new image. By applying the patch to the padded image, most operations are able to work effectively without overwriting. There is source data to allow for an efficient diff-based synthesis, for example synthesis of part k' from part k. In this case, in operation 15, the source data j was overwritten by previous operations 11 and 12 and the creation of parts m' and n'. However, the reduction in overwritten data during the patching process results in an improvement over the pathological case.

In an example not forming part of the invention, the padding operation can be implemented as a 'virtual' padding where the source image data is stored in a second memory to emulate the movement. The second memory may be a volatile memory, such as a RAM buffer.

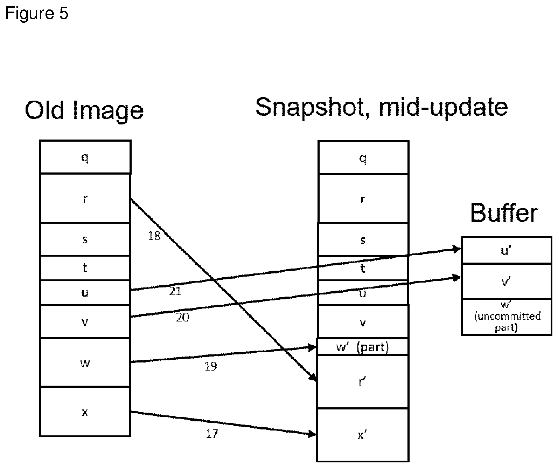

This implementation is illustrated in Figure 5 for image blocks q-w. Here, the update is performed bottom-up. The source image q-w to be updated is in its initial place in the first memory. The new patch is downloaded to the buffer where it is validated and it is checked that it is applicable to the old source image. Sections of the old image are then written to the buffer where they are updated. Figure 5 shows the update in-progress, with sections x and r having already been updated to x' and r' and written back to the first memory in operations 17 and 18 respectively. The patch was applied to these image sections in the buffer. Once the patch was applied in the buffer, the updated sections x' and r' were then erased from the RAM buffer and written back into the source image stored in the first memory by the RAM buffer. r' would ordinarily overwrite a part of w when it is written back to the memory. To avoid this, the part of w that would have been overwritten can be written to the buffer and updated along with the previous section(s).

The updates to sections u, v and the uncommitted part of w are shown in-progress. u and v have been written from the first memory to the buffer, as shown by operations 20 and 21, and have been updated to u' and v'. Part of w (the part that would have been overwritten by r') has already been updated to w' (part) and written back to the memory, as shown by operation 19. The remainder of w is updated to w' (uncommitted part) in the buffer.

w' would ordinarily overwrite u and v in the old image. However, as u and v have been written to the buffer along with the remainder of w, they can be updated in the buffer before being written back to their memory locations in the first memory. Once the patch has been applied in the buffer, the updated sections u', v' and w' (uncommitted part) are then erased from the RAM buffer and written back into the source image stored in the first memory by the RAM buffer. The same process is then performed for the remaining image sections t, s and q.

This ensures that parts of the source image that would otherwise be overwritten when preceding parts of the image are written back to the first memory are copied to the buffer before they are overwritten.

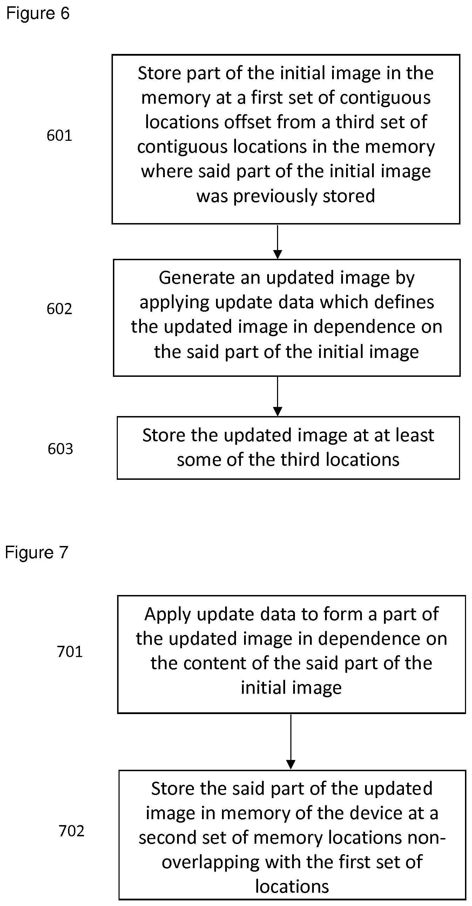

Figure 6 illustrates a method for updating an initial image in a device, at least part of the initial image being stored at a third set of contiguous locations in a non-volatile memory of the device. In step 601, the method comprises storing part of the initial image in the memory at a first set of contiguous locations offset from a third set of contiguous locations in the memory (where said part of the source image was initially stored). In step 602, an updated image is generated by applying update data which defines the updated image in dependence on the said part of the initial image. The next step at 603 comprises storing the updated image at at least some of the third set of locations.

Using the techniques described herein, the Diff sizes are reduced to around 90 kB (1 Diff of ca. 1kB, 1 Diff of ca. 89 kB), compared to Diffs of around 250 kB on 640 kB images for the pathological case illustrated in Figure 1. Therefore, this approach is shown to generally result in smaller Diffs than the 'reversal' approaches and the firmware update process can be carried out more efficiently. The method is also relatively simple to implement. By applying the patch to the padded source image, most operations are able to work effectively without overwriting of the source data required to update other parts of the image.

**Claims**

1. A device having a first memory configured to store an initial image for operating the device, a part of the initial image being initially stored at a third set of contiguous locations in the first memory, the device being further configured to store update data for updating the device by generating a replacement image, the update data defining the replacement image at least in part by a transformation of content of the initial image; the device being configured to update the initial image by the steps of:

　　storing (601) the part of the initial image at a first set of locations offset from the third set of locations;
　　applying (602) the update data to form a part of the updated image in dependence on the content of the part of the initial image; and
　　storing (603) the part of the updated image in memory of the device at a second set of memory locations non-overlapping with the first set of locations, wherein the second set of memory locations overlaps the third set of contiguous locations,
wherein:

the first set of locations is a first set of contiguous locations;
the device is configured to perform the step of storing the part of the initial image at the first set of contiguous locations by shifting the entirety of the initial image in the first memory from an original contiguous block of the first memory to a second contiguous block of the first memory overlapping the original contiguous block, wherein the lower memory locations of the second contiguous block overlap the original contiguous block and the higher memory locations of the second contiguous block do not overlap the original contiguous block, and wherein the first set of locations do not overlap with the third set of locations; and
the update data defines a set of chunks of the updated image in dependence on respective chunks of the initial image, the set of chunks of the updated image including a chunk that is the part of the updated image and the set of chunks of the initial image including a chunk that is the part of the initial image, and the applying (701) comprises progressively forming the updated image such that each chunk of the updated image is formed in order of increasing memory locations of the chunk of the initial image on which it is dependent.

2. The device as claimed in claim 1, wherein the first memory is a non-volatile memory.

3. The device as claimed in claim 1 or claim 2, wherein the initial image is some part of the firmware of the device.

4. A method for updating an initial image in a device, the device having a first memory configured to store an initial image for operating the device, a part of the initial image being initially stored at a third set of contiguous locations in the first memory, the device being further configured to store update data for updating the device by generating a replacement image, the update data defining the replacement image at least in part by a transformation of content of the initial image; the method comprising:

storing (601) the part of the initial image at a first set of locations offset from the third set of locations;
applying (602) the update data to form a part of the updated image in dependence on the content of the part of the initial image; and
storing (603) the part of the updated image in memory of the device at a second set of memory locations non-overlapping with the first set of locations, wherein the second set of memory locations overlaps the third set of contiguous locations,
wherein:

the first set of locations is a first set of contiguous locations;
the step of storing (601) the part of the initial image at the first set of contiguous locations comprises shifting the entirety of the initial image in the first memory from an original contiguous block of the first memory to a second contiguous block of the first memory overlapping the original contiguous block, wherein the lower memory locations of the second contiguous block overlap the original contiguous block and the higher memory locations of the second contiguous block do not overlap the original contiguous block, and wherein the first set of locations do not overlap with the third set of locations; and
the update data defines a set of chunks of the updated image in dependence on respective chunks of the initial image, the set of chunks of the updated image including a chunk that is the part of the updated image and the set of chunks of the initial image including a chunk that is the part of the initial image, and the applying (701) comprises progressively forming the updated image such that each chunk of the updated image is formed in order of increasing memory locations of the chunk of the initial image on which it is dependent.

**Patentansprüche**

1. Gerät, das einen ersten Speicher aufweist, der konfiguriert ist zum Speichern eines anfänglichen Bildes zum Betreiben des Geräts, wobei ein Teil des anfänglichen Bildes anfänglich in einem dritten Satz von aneinandergrenzenden Orten in dem ersten Speicher gespeichert wird, wobei das Gerät ferner konfiguriert ist zum Speichern von Aktualisierungsdaten zum Aktualisieren des Geräts, indem ein Ersatzbild erzeugt wird, wobei die Aktualisierungsdaten das Ersatzbild mindestens teilweise durch eine Transformation eines Inhalts des anfänglichen Bildes definieren; wobei das Gerät konfiguriert ist zum Aktualisieren des anfänglichen Bildes durch die folgenden Schritte:

Speichern (601) des Teils des anfänglichen Bildes in einem ersten Satz von Orten, der gegenüber dem dritten Satz von Orten versetzt ist;

Anwenden (602) der Aktualisierungsdaten, um einen Teil des aktualisierten Bildes in Abhängigkeit von dem Inhalt des Teils des anfänglichen Bildes zu bilden; und

Speichern (603) des Teils des aktualisierten Bildes in dem Speicher des Geräts in einem zweiten Satz von Speicherorten, der sich nicht mit dem ersten Satz von Orten überschneidet, wobei der zweite Satz von Speicherorten sich mit dem dritten Satz von aneinandergrenzenden Orten überschneidet,

wobei:

der erste Satz von Orten ein erster Satz von aneinandergrenzenden Orten ist;

wobei das Gerät konfiguriert ist zum Durchführen des Schritts des Speicherns des Teils des anfänglichen Bildes in dem ersten Satz von aneinandergrenzenden Orten, indem die Gesamtheit des anfänglichen Bildes in dem ersten Speicher von einem aneinandergrenzenden Originalblock des ersten Speichers zu einem zweiten aneinandergrenzenden Block des ersten Speichers verschoben wird, der sich mit dem aneinandergrenzenden Originalblock überschneidet, wobei sich die unteren Speicherorte des zweiten aneinandergrenzenden Blocks mit dem aneinandergrenzenden Originalblock überschneiden und wobei sich die oberen Speicherorte des zweiten aneinandergrenzenden Blocks nicht mit dem aneinandergrenzenden Originalblock überschneiden, und wobei sich der erste Satz von Orten nicht mit dem dritten Satz von Orten überschneidet; und

wobei die Aktualisierungsdaten einen Satz von Blöcken des aktualisierten Bildes in Abhängigkeit von entsprechenden Blöcken des anfänglichen Bildes definieren, wobei der Satz von Blöcken des aktualisierten Bildes einen Block beinhaltet, der Teil des aktualisierten Bildes ist, und wobei der Satz von Blöcken des anfänglichen Bildes einen Block beinhaltet, der der Teil des anfänglichen Bildes ist, und wobei das Anwenden (701) ein progressives Bilden des aktualisierten Bildes umfasst, sodass jeder Block des aktualisierten Bildes gebildet wird, um die Speicherorte des Blocks des anfänglichen Bildes zu vergrößern, von dem es abhängig ist.

2. Gerät nach Anspruch 1, wobei der erste Speicher ein nicht-flüchtiger Speicher ist.

3. Gerät nach Anspruch 1 oder Anspruch 2, wobei das anfängliche Bild irgendein Teil der Firmware des Geräts ist.

4. Verfahren zum Aktualisieren eines anfänglichen Bildes in einem Gerät, wobei das Gerät einen ersten Speicher aufweist, der konfiguriert ist zum Speichern eines anfänglichen Bildes zum Betreiben des Geräts, wobei ein Teil des anfänglichen Bildes anfänglich in einem dritten Satz von aneinandergrenzenden Orten in dem ersten Speicher gespeichert wird, wobei das Gerät ferner konfiguriert ist zum Speichern von Aktualisierungsdaten zum Aktualisieren des Geräts, indem ein Ersatzbild erzeugt wird, wobei die Aktualisierungsdaten das Ersatzbild mindestens teilweise durch eine Transformation eines Inhalts des anfänglichen Bildes definieren; wobei das Verfahren umfasst:

Speichern (601) des Teils des anfänglichen Bildes in einem ersten Satz von Orten, der gegenüber dem dritten Satz von Orten versetzt ist;

Anwenden (602) der Aktualisierungsdaten, um einen Teil des aktualisierten Bildes in Abhängigkeit von dem Inhalt des Teils des anfänglichen Bildes zu bilden; und

Speichern (603) des Teils des aktualisierten Bildes in dem Speicher des Geräts in einem zweiten Satz von Speicherorten, der sich nicht mit dem ersten Satz von Orten überschneidet, wobei der zweite Satz von Speicherorten sich mit dem dritten Satz von aneinandergrenzenden Orten überschneidet, wobei:

der erste Satz von Orten ein erster Satz von aneinandergrenzenden Orten ist;

der Schritt des Speicherns (601) des Teils des anfänglichen Bildes in dem ersten Satz von aneinandergrenzenden Orten ein Verschieben der Gesamtheit des anfänglichen Bildes in dem ersten Speicher von einem aneinandergrenzenden Originalblock des ersten Speichers zu einem zweiten aneinandergrenzenden Block des ersten Speichers umfasst, der sich mit dem aneinandergrenzenden Originalblock überschneidet, wobei sich die unteren Speicherorte des zweiten aneinandergrenzenden Blocks mit dem aneinandergrenzenden Originalblock überschneiden und wobei sich die oberen Speicherorte des zweiten aneinandergrenzenden Blocks nicht mit dem aneinandergrenzenden Originalblock überschneiden, und wobei sich der erste Satz von Orten nicht mit dem dritten Satz von Orten überschneidet; und

wobei die Aktualisierungsdaten einen Satz von Blöcken des aktualisierten Bildes in Abhängigkeit von entsprechenden Blöcken des anfänglichen Bildes definieren, wobei der Satz von Blöcken des aktualisierten Bildes einen Block beinhaltet, der Teil des aktualisierten Bildes ist, und wobei der Satz von Blöcken des anfänglichen Bildes einen Block beinhaltet, der Teil des anfänglichen Bildes ist, und wobei das Anwenden (701) ein progressives Bilden des aktualisierten Bildes umfasst, sodass jeder Block des aktualisierten Bildes gebildet wird, um die Speicherorte des Blocks des anfänglichen Bildes zu vergrößern, von dem es abhängig ist.

## Revendications

1. Dispositif ayant une première mémoire configurée pour stocker une image initiale pour faire fonctionner le dispositif, une partie de l'image initiale étant initialement stockée au niveau d'un troisième ensemble d'emplacements contigus dans la première mémoire, le dispositif étant en outre configuré pour stocker des données de mise à jour pour mettre à jour le dispositif en générant une image de remplacement, les données de mise à jour définissant l'image de remplacement au moins en partie par une transformation de contenu de l'image initiale ; le dispositif étant configuré pour mettre à jour l'image initiale par les étapes consistant à :

stocker (601) la partie de l'image initiale au niveau d'un premier ensemble d'emplacements décalé par rapport au troisième ensemble d'emplacements ;
appliquer (602) les données de mise à jour pour former une partie de l'image mise à jour en fonction du contenu de la partie de l'image initiale ; et
stocker (603) la partie de l'image mise à jour dans la mémoire du dispositif au niveau d'un deuxième ensemble d'emplacements de mémoire ne chevauchant pas le premier ensemble d'emplacements, le deuxième ensemble d'emplacements de mémoire chevauchant le troisième ensemble d'emplacements contigus, dans lequel :

le premier ensemble d'emplacements est un premier ensemble d'emplacements contigus ;
le dispositif est configuré pour réaliser l'étape consistant à stocker la partie de l'image initiale au niveau du premier ensemble d'emplacements contigus en déplaçant l'intégralité de l'image initiale dans la première mémoire depuis un bloc contigu original de la première mémoire vers un deuxième bloc contigu de la première mémoire chevauchant le bloc contigu original, dans lequel les emplacements de mémoire inférieurs du deuxième bloc contigu chevauchent le bloc contigu original et les emplacements de mémoire supérieurs du deuxième bloc contigu ne chevauchent pas le bloc contigu original, et dans lequel le premier ensemble d'emplacements ne chevauche pas le troisième ensemble d'emplacements ; et
les données de mise à jour définissent un ensemble de fragments de l'image mise à jour en fonction de fragments respectifs de l'image initiale, l'ensemble de fragments de l'image mise à jour incluant un fragment qui est la partie de l'image mise à jour et l'ensemble de fragments de l'image initiale incluant un fragment qui est la partie de l'image initiale, et l'application (701) comprend la formation progressive de l'image mise à jour de telle sorte que chaque fragment de l'image mise à jour soit formé afin d'augmenter les emplacements de mémoire du fragment de l'image initiale de laquelle il dépend.

2. Dispositif selon la revendication 1, dans lequel la première mémoire est une mémoire non volatile.

3. Dispositif selon la revendication 1 ou la revendication 2, dans lequel l'image initiale fait partie du micrologiciel du dispositif.

4. Procédé de mise à jour d'une image initiale dans un dispositif, le dispositif ayant une première mémoire configurée pour stocker une image initiale afin de faire fonctionner le dispositif, une partie de l'image initiale étant initialement stockée au niveau d'un troisième ensemble d'emplacements contigus dans la première mémoire, le dispositif étant en outre configuré pour stocker des données de mise à jour afin de mettre à jour le dispositif en générant une image de remplacement, les données de mise à jour définissant l'image de remplacement au moins en partie par une transformation de contenu de l'image initiale ; le procédé comprenant :

le stockage (601) de la partie de l'image initiale au niveau d'un premier ensemble d'emplacements décalé par rapport au troisième ensemble d'emplacements ;
l'application (602) des données de mise à jour pour former une partie de l'image mise à jour en fonction du contenu de la partie de l'image initiale ; et

le stockage (603) de la partie de l'image mise à jour dans la mémoire du dispositif au niveau d'un deuxième ensemble d'emplacements de mémoire ne chevauchant pas le premier ensemble d'emplacements, le deuxième ensemble d'emplacements de mémoire chevauchant le troisième ensemble d'emplacements contigus, dans lequel :

le premier ensemble d'emplacements est un premier ensemble d'emplacements contigus ;

l'étape consistant à stocker (601) la partie de l'image initiale au niveau du premier ensemble d'emplacements contigus comprend le déplacement de l'intégralité de l'image initiale dans la première mémoire depuis un bloc contigu original de la première mémoire vers un deuxième bloc contigu de la première mémoire chevauchant le bloc contigu original, dans lequel les emplacements de mémoire inférieurs du deuxième bloc contigu chevauchent le bloc contigu original et les emplacements de mémoire supérieurs du deuxième bloc contigu ne chevauchent pas le bloc contigu original, et dans lequel le premier ensemble d'emplacements ne chevauche pas le troisième ensemble d'emplacements ; et

les données de mise à jour définissent un ensemble de fragments de l'image mise à jour en fonction de fragments respectifs de l'image initiale, l'ensemble de fragments de l'image mise à jour incluant un fragment qui est la partie de l'image mise à jour et l'ensemble de fragments de l'image initiale incluant un fragment qui est la partie de l'image initiale, et l'application (701) comprend la formation progressive de l'image mise à jour de telle sorte que chaque fragment de l'image mise à jour soit formé afin d'augmenter les emplacements de mémoire du fragment de l'image initiale de laquelle il dépend.

Figure 1

Figure 2

Figure 3

| 301 | Receive patch |

| 302 | Read section of source image |

| 303 | Apply update from patch |

| 304 | Write updated section to memory by overwriting stored source image |

Figure 4

Old Image | Padded Image | New Image

Figure 5

Old Image

Snapshot, mid-update

Buffer

Figure 6

601 — Store part of the initial image in the memory at a first set of contiguous locations offset from a third set of contiguous locations in the memory where said part of the initial image was previously stored

602 — Generate an updated image by applying update data which defines the updated image in dependence on the said part of the initial image

603 — Store the updated image at at least some of the third locations

Figure 7

701 — Apply update data to form a part of the updated image in dependence on the content of the said part of the initial image

702 — Store the said part of the updated image in memory of the device at a second set of memory locations non-overlapping with the first set of locations

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018054496 A1
- US 6018747 A
- US 2017090901 A1
- WO 2005088448 A1